# EUROPEAN PATENT SPECIFICATION

(11) **EP 2 883 797 B1**
(45) Date of publication and mention of the grant of the patent: **30.05.2018**
(21) Application number: 13197522.9
(22) Date of filing: 16.12.2013
(51) Int. Cl.: B64F 5/00, B21D 26/14

(54) **Method and apparatus for manufacturing a structural component for an aircraft or spacecraft**
Verfahren und Vorrichtung zur Herstellung eines Strukturelements für ein Flugzeug oder Raumfahrzeug
Procédé et appareil de fabrication d'un élément structurel pour un avion ou un engin spatial

(43) Date of publication of application: 17.06.2015
(73) Proprietor: Airbus Operations GmbH, 21129 Hamburg (DE)
(72) Inventor: Frauen, Holger, 21129 Hamburg (DE); Goehlich, Robert Alexander, 21129 Hamburg (DE)
(74) Representative: Isarpatent

(56) References cited:
- EP-A1- 0 507 033
- EP-A1- 2 596 904
- DE-A1- 19 822 731
- DE-A1-102011 051 639
- US-A- 5 806 797
- US-A1- 2010 192 377

## Description

The present invention relates to a method for manufacturing a structural component for an aircraft or spacecraft, more particularly a structural component including a shell component. Furthermore, the invention relates to an apparatus for manufacturing such a component.

Although applicable to arbitrary structural components, being for example in the case of structural components for a spacecraft particularly applicable to components for elongate objects such as rocket stages, space station modules or satellites, the invention and underlying problem will be described with reference to structural components for the fuselage shell of an aircraft. Conventionally, manufacturing of such structural components involves riveting or welding stringers and frame-mounting clips or angles onto a subshell of the aircraft shell. In further steps, typically frames are positioned on the subshell and riveted to the clips, subshells are assembled so that they overlap a few centimetres and riveted together in order to form sections, before the completed sections are pushed together and connected using butt-straps, fixing the stringer and frames with a strap-connection. For example, US 5, 806, 797 A describes a method for joining components of an aircraft fuselage by means of riveting.

In the above conventional manufacturing process, an immense number of holes has to be drilled, which is time-consuming. Furthermore, an equally immense number of rivets is needed, which leads to high manufacturing cost due to the cost of each rivet, and moreover causes high noise emissions during deployment of the rivets. Alternative processes using bonding are time-intensive as well in that they require surface preparation, manual labour, and long curing times.

Document DE 10 2011 051 639 A1 describes a method for joining of compound sheets by means of electromagnetic pulse forming technique. An apparatus for positioning and joining components including a joining tool is described in EP 2 596 904 A1.

It is an object of the present invention to reduce the amount of time needed for manufacturing structural components that include a shell component.

According to the invention, this object is attained by a manufacturing method with the features of claim 1 and a manufacturing apparatus with the features of claim 9.

The idea underlying the present invention consists in that, in order to manufacture a structural component for an aircraft or spacecraft, an electromagnetic pulse is used to join a shell component of the aircraft or spacecraft to a further component, after the shell component and the further component have been positioned adjacent to each other, wherein at least one of the shell component and the further component is electrically non-conductive. The inventive apparatus comprises a positioner for positioning a shell component, of the aircraft or spacecraft, and a further component adjacent to each other, and an electromagnetic pulse generator for generating an electromagnetic pulse to join the shell component and the further component.

Because the shell component and the further component are joined by an electromagnetic pulse, a virtually instantaneous connection between the shell component and the further component is enabled, e.g., by Magnetic Pulse Welding (MPW), a welding process that uses magnetic forces to drive, and weld two workpieces together, or, e.g., magnetic deformation of the further component to achieve a positive-fit connection between the shell component and the further component. Consequently, the time required for manufacturing as well as manufacturing cost can be reduced by avoiding drilling, clamping, and bonding processes that conventionally are required in manufacturing processes involving rivets. The avoidance of rivets furthermore leads to a noise reduction during manufacturing as well as to an advantageous weight reduction of the aircraft. A further advantage lies in that the invention favourably lends itself to automation, as an electromagnetic pulse generator for generating the electromagnetic pulse can be realised at low weight, which makes it feasible to mount the electromagnetic pulse generator on a robotic arm that will then also require lower positioning accuracy in comparison to conventional manufacturing processes. Moreover, a lead time reduction is enabled because fewer manufacturing steps are required than in the above-described conventional manufacturing processes.

Advantageous developments and improvements of the invention are given in the dependent claims.

According to a preferred development, the method further comprises holding at least one of the shell component and the further component by at least one suction cup or temporary fastener, before generating the electromagnetic pulse. This enables particularly short manufacturing times since a temporary immobilisation can be quickly achieved by the suction cup or temporary fastener.

According to a preferred development, the method further comprises bonding the shell component to the further component, before generating the electromagnetic pulse. This allows particularly precise positioning of the further component with respect to the shell component before the connection is made permanent by the electromagnetic pulse.

According to a development, one of the shell component and the further component is electrically conductive, for example by being metallic or comprising electrically conductive fibres such as carbon fibres in the case of carbon-reinforced plastic. This enables the electromagnetic pulse to directly accelerate the conductive component such that no further tooling is required.

According to a preferred development, both of the shell component and the further component are electrically non-conductive. According to a preferred development, the shell component comprises an outer skin of the aircraft or spacecraft, the further component being joined to the shell component by joining the further component to the outer skin. Preferably, the further component is selected from the group consisting of a further shell component, a stringer, a clip, a frame, an integral frame, and a butt strap. In this way, a complex structural component is enabled to be manufactured.

According to a preferred development, the further component comprises a frame and the shell component comprises a clip attached to an outer skin of the aircraft or spacecraft, the shell component and the further component being joined by joining the clip to the outer skin.

According to a preferred development, the shell component comprises a stringer or frame attached to an outer skin of the aircraft or spacecraft, and wherein the further component comprises a coupling, the shell component and the further component being joined by joining the coupling to the stringer or frame.

The inventive apparatus further comprises a conductive tooling, for example comprising metal or electrically conductive fibres, configured to be accelerated by the electromagnetic pulse to join the shell component and the further component. This enables the shell component and the further component to be joined by the electromagnetic pulse even if both the shell component and the further component are electrically non-conductive, for example comprising a plastic material reinforced by non-conductive fibres such as glass fibres, through accelerating the conductive tooling by the electromagnetic pulse.

According to a preferred development, the positioner comprises a robot for holding the further component adjacent to the shell component, before generating the electromagnetic pulse. This enables particularly time-efficient manufacturing through automatisation. Preferably, the positioner comprises a rail for guiding the robot along the shell component. In this way, the further component may be attached in a plurality of positions along the shell component in an automated fashion. More preferably, the positioner is configured to support the shell component from below, the rail being arranged above the shell component to suspend the robot into the shell component through an opening therein. In this way, manufacturing of a structural component that includes a shell component extending over more than a half circle (180º) of the circumference of the aircraft is conveniently enabled.

According to a preferred development, the positioner comprises a U-shaped profile for holding the further component, adjacent to the shell component, and the electromagnetic pulse generator comprises an electromagnetic coil for ejecting the further component from the U-shaped profile toward the shell component, by the electromagnetic pulse. This enables the further component to be positioned by a particularly simple construction without requiring moving parts.

Preferred embodiments of the invention will be described below with reference to the drawings, in which:
- Fig. 1: is a schematic planar side view of a manufacturing apparatus according to an embodiment, during performance of a method, according to an embodiment, for manufacturing a structural component for an aircraft or spacecraft;
- Fig. 2: is a schematic perspective view of a manufacturing apparatus according to another embodiment, during performance of a method, according to an embodiment, for manufacturing a structural component for an aircraft or spacecraft;
- Fig. 3: is a schematic planar view of an aircraft or spacecraft fuselage structural component, which has been manufactured by a method according to an embodiment;
- Fig. 4: is a schematic planar side view of a manufacturing apparatus according to an embodiment according to the invention, during performance of a manufacturing method according to an embodiment;
- Fig. 5: is a schematic planar side view of a manufacturing apparatus according to an embodiment, during performance of a manufacturing method according to an embodiment;
- Figs. 6A-B: are schematic planar views of a positioning step and an electromagnetic pulse generating step, respectively, of a method according to an embodiment;
- Figs. 7A-B: are schematic planar views of a positioning step and an electromagnetic pulse generating step, respectively, of a method according to an embodiment; and
- Fig. 8: is a schematic planar view of a manufacturing apparatus according to an embodiment, during performance of a method, according to an embodiment, for manufacturing a structural component for an aircraft or spacecraft.

In the drawings, same reference signs denote same constructional elements, unless explicitly indicated otherwise.

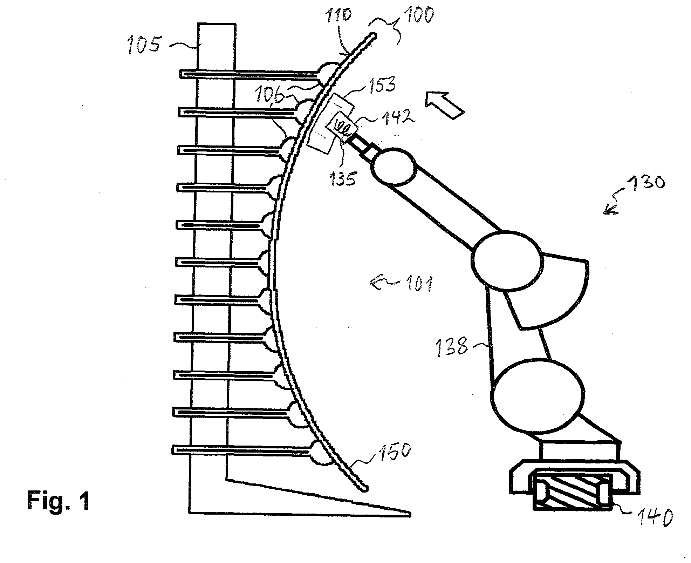

Figure 1 shows, in a schematic planar side view, a manufacturing apparatus 130 for manufacturing a structural component 100 for an aircraft. In the present embodiment, the structural component 100 to be manufactured by the manufacturing apparatus 130 is a structural component for the fuselage shell of the aircraft (not shown), which includes both a shell component 150 comprising a portion of the outer skin 110 of the aircraft and a frame-mounting clip 153 to be attached to the shell component 150 by being mounted to the inward-facing side of the outer skin 110. In the present embodiment, the frame-mounting clip 153 is assumed to be electrically conductive, for example by comprising a metal such as aluminium, or by comprising a plastic reinforced by carbon or other conductive fibres, while the outer skin 110 of the aircraft may be electrically conductive or non-conductive. For example, the outer skin 110 may comprise aluminium, plastics reinforced by various conductive or non-conductive fibres such as carbon or glass fibres, a laminate of metallic and non-metallic layers, or other suitable materials.

The manufacturing apparatus 130 comprises a stand 105 for holding the shell component 100 in a fixed position in such a way that the inward-facing side of the shell component 150 is accessible, from the side, through an opening 101 in the outer skin 110. In Figure 1, the shell component 100 shown exemplarily represents one quarter (90º) of a full circumference of the aircraft fuselage, with the opening 101 corresponding to the remaining three quarters (270º). The stand 105 is equipped with a plurality of suction cups 106 for reversibly attaching by vacuum suction to the outward-facing side of the outer skin 110. Preferably, two or more stands 105 are arranged next to each other to hold the shell component 100 in a plurality of locations along its length.

The manufacturing apparatus 130 further comprises an industrial robot 138 installed on a rail 140, which extends along the inward-facing side of the shell component 150, such that the robot 138 by moving its arm is able to reach each angular position of the inward-facing side of the outer skin 110 along its circumferential direction, and by moving on the rail 140 is able to reach each longitudinal position along the length of the shell component 150, resulting in a complete coverage of the inward-facing side of the outer skin 110.

At the tip of its arm, the robot 138 bears a U-shaped profile 142 configured to hold a frame-mounting clip 153 that is to be attached to a predetermined position of the inward-facing side of the outer skin 110 of the shell component 150. The U-shaped profile comprises an electrically non-conductive material. The shape of the U-shaped profile 142 generally conforms to the shape of the letter "U", such as to be able to allow movement of the frame-mounting clip 153 towards the outer skin 110 while preventing movement of the frame-mounting clip 153 in other directions. In alternative embodiments, a holding element of another shape or construction may be used instead of the U-shaped profile 142, provided that the holding element is adapted to hold the frame-mounting clip 153, or other component to be attached to the shell component 150, while allowing movement of the frame-mounting clip 153 toward the shell component 150 for at least a limited distance of e.g. 1 mm. For example, a holding element comprising vacuum suction cups may be used, the vacuum suction cups being configured to hold the component to be attached to the shell component 150 by vacuum suction while allowing a limited movement of 1 mm toward the shell component due to an elastic property of, e.g., the suction cups themselves.

Furthermore, an electromagnetic coil 135 is arranged at the tip of the robot arm, which is connected to a controller and power source (not shown) such as to form an electromagnetic pulse generator that is adapted to generate an electromagnetic pulse to move the frame-mounting clip 153 toward the shell component 150 with sufficient strength to join the shell component 150 and the frame-mounting clip 153 by magnetic pulse welding.

In operation, the shell component 150 is first mounted on the stand 105 by engaging the vacuum suction cups 106, such that the opening 101 of the shell component 150 exposes the inward-facing side of the shell component 150, i.e., the inward-facing side of the outer skin 110 of the shell component 150, to the robot 138. Then, a frame-mounting clip 153 that, in order to manufacture the structural component 100, is to be attached to the shell component 150 is inserted into the U-shaped profile 142. For example, the shell component 150 may be inserted manually, or the robot 138 may be controlled to receive or pick up the frame-mounting clip 153 from a storage rack or the like. In a further step, the robot 138 is controlled to move the frame-mounting clip 153 to its intended attachment position opposite the inward-facing side of the shell component, at a distance of, e. g., between 0 mm and 1 mm from the outer skin 110.

Next, the electromagnetic pulse generator comprising the electromagnetic coil 135 is controlled to pass a very high AC current therethrough. An intense magnetic field is locally produced that generates a secondary eddy current in the frame-mounting clip 153 according to Lenz's Law. The net effect of the secondary current in the primary magnetic field is the generation of a Lorentz force, which accelerates the frame-mounting clip 153 at a very high velocity toward the shell component 150, thus leading to an impact which causes a solid state weld between the frame-mounting clip 153 and the outer skin 110.

In the present embodiment, frame-mounting clip 153 has been described as an example of a further component that is to be attached to the shell component 150 in order to manufacture the structural component 100. However, in alternative embodiments, other components than the frame-mounting clip 153, such as e.g. a further shell component, a stringer, an integral frame, or a butt strap, may be chosen to be attached to the shell component 150. Furthermore, the shell component 150 may comprise additional elements besides the outer skin 110, with the further component being arranged for attachment to such additional elements.

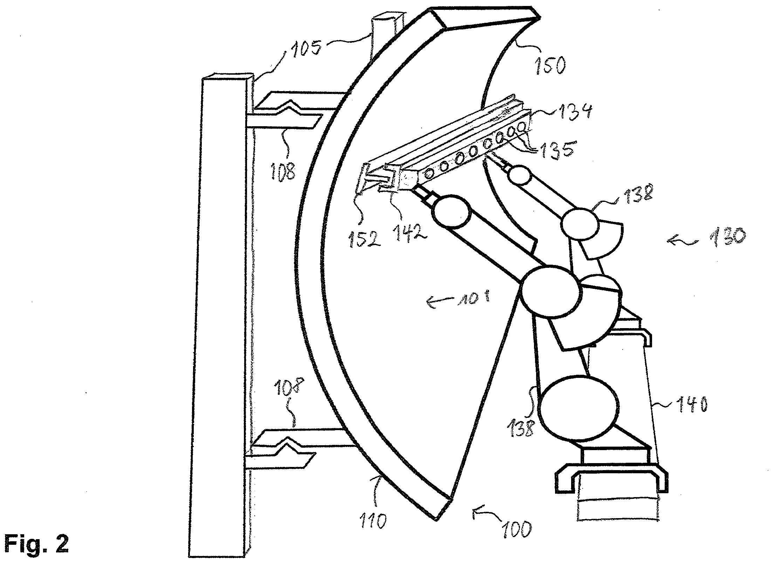

In a schematic perspective view, Figure 2 shows a manufacturing apparatus 130 according to a different embodiment. In order to avoid repetitions, only elements different from the embodiment in Figure 1 are described. In the embodiment of Figure 2, the stand 105 for holding the shell component 150 is equipped with temporary fasteners 108 adapted to engage with corresponding fasteners 108 temporarily mounted to the outward-facing side of the outer skin 110 of the shell component 150. The manufacturing apparatus 130 comprises two robots 138 mounted on a common rail 140. At the tips of both robot 138 arms, a U-shaped profile 142 is mounted that extends essentially along the entire length of the shell component 150 and is adapted to receive a stringer 152 as the further component to be attached to the shell component 150 in order to manufacture the structural component 100. Along the side opposite the open side of the U-shaped profile 142, an electromagnetic pulse generator 134 is installed, which comprises a plurality of electromagnetic coils 135 arranged in a row substantially along the entire length of the U-shaped profile 142. The axes of each electromagnetic coil 135 are oriented such as to become, for generating of an electromagnetic pulse, aligned perpendicularly to the inward-facing surface of the outer skin 110. In this way, a particularly strong electromagnetic field at the location of the stringer 152 is enabled to be efficiently generated. In alternative embodiments, a single electromagnetic coil 135 or a plurality of electromagnetic coils 135 may extend substantially along the entire length of the U-shaped profile 142.

In operation, the shell component 150 is first mounted on the stand 105 by engaging the temporary fasteners 108. Then, a stringer 152 that, in order to manufacture the structural component 100, is to be attached to the shell component 150 is inserted into the U-shaped profile 142. In a further step, the robots 138 are controlled to move the stringer 152 to its intended attachment position opposite the inward-facing side of the shell component, at a distance of e.g. between 0 mm and 1 mm from the outer skin 110. Next, the electromagnetic pulse generator 134 is controlled to pass a very high AC current through the electromagnetic coil 135, which accelerates the stringer 152 at a very high velocity toward the shell component 150, thus leading to an impact which causes a solid state weld between the frame-mounting clip 153 and the outer skin 110.

In the above embodiments, the further component 151, 152 is assumed to be electrically conductive. However, in alternative embodiments the frame-mounting clip 151, stringer 152 or other such further component may comprise an electrically non-conductive material if an appropriate conductive tooling is arranged between the electromagnetic pulse generator 134 and the further component 151, 152.

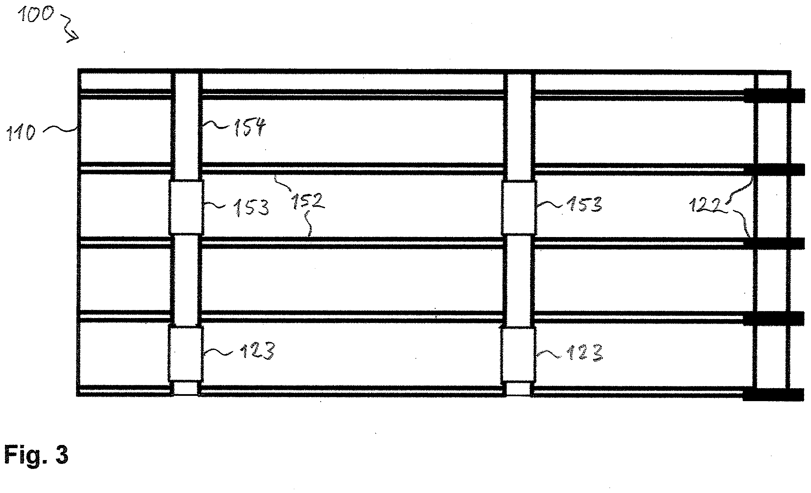

Figure 3 is a schematic planar view of the inward-facing side of an aircraft fuselage structural component 100 manufactured according to a method essentially as described above. The structural component 100 comprises an outer skin 110 to which stringers 152 and frame-mounting clips 153 have been attached by using magnetic pulse welding essentially as described above. Moreover, in subsequent steps frames 154 have been attached to the frame-mounting clip 153, frame-couplings 123 have been attached to the frames 154, and stringer couplings 122 have been attached to the stringers 152. In each step, magnetic pulse welding was used as well to join the frames 154, frame-couplings 123, and stringer couplings 122 to the shell component.

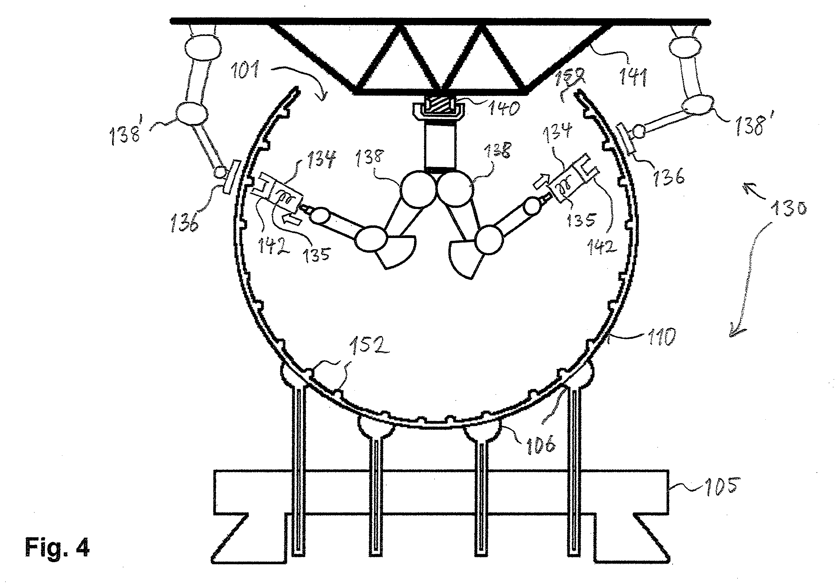

Figure 4 is a schematic planar side view of another manufacturing apparatus 130. As in the embodiment of Figure 1, a stand 105 equipped with suction cups 106 is provided to hold the shell component 150. However, in the present embodiment the stand 105 is configured to support the shell component 150 from below, such that the opening 101 of the shell component 150, which in this case corresponds to only one quarter of a full circle (90º) faces upward. For example, the shell component 150 may have been assembled from a lower shell and two side shells beforehand. Furthermore, the apparatus 130 comprises a roof suspension 141 to which a rail 140 is mounted for suspending robots 138 from above through the opening 101 into the interior of the shell component 150. The rail 140 extends in the axial direction of the aircraft fuselage, thus enabling the robots 138 to move longitudinally along the shell component 150.

In the present embodiment, the shell component 150 is assumed to include both the outer skin 110 and stringers 152 attached to the inside of the outer skin 110. Also, both the shell component 150 and further components such as stringer couplings (not shown) are assumed to comprise only non-conductive materials such as a fibre-reinforced plastic. In order to enable such non-conductive further components to be joined to the non-conductive shell component 150, additional tooling robots 138' are suspended from the roof suspension 141 outside the shell component 150. At the tip of the robot arms, the tooling robots 138' bear an electrically conductive tooling 136.

In operation, a non-conductive further component (not shown) such as a stringer coupling is inserted into the U-shaped profile 142 of one of the robots 138. Then, the robot 138 is controlled such as to position the further component at the intended attachment position opposite the inward-facing side of the shell component 150. Together, the corresponding tooling robot 138' closest to the robot 138 positioning the further component is controlled such as to position the tooling 136 outside the shell component 150, in essentially the same position as the U-shaped profile 142 has been positioned inside the shell component 150. Next, the electromagnetic pulse generator 134 next to the further component is controlled to pass a very high AC current through the electromagnetic coil 135 to accelerate the tooling 136, which is elastically held by the tooling robot 138', at a very high velocity toward the shell component 150, thus leading to an impact which causes a solid state weld between the further component and the stringer 152 next to it.

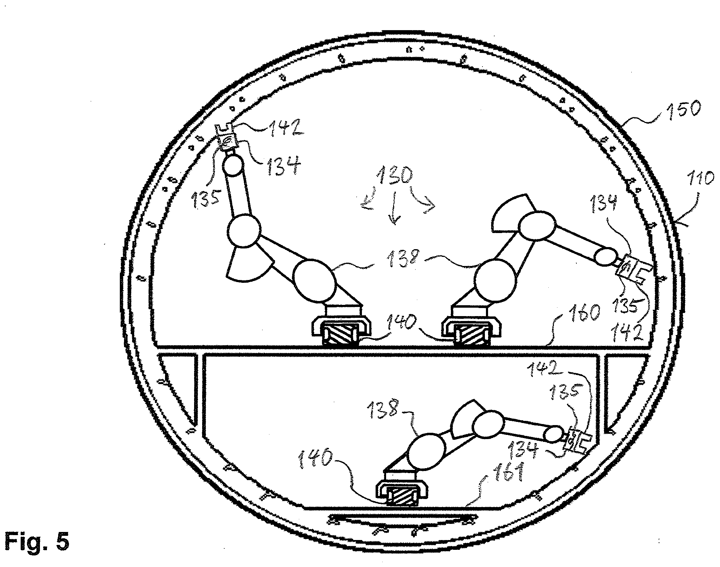

Figure 5 is a schematic planar side view of a further manufacturing apparatus 130, wherein the shell component 150 for an aircraft fuselage is shown to extend over a full circle (360º). For example, the shell component 150 may have been assembled from a lower shell, upper shell and two side shells beforehand, followed by an installation of a floor grid and a cargo floor. In order to attach further components (not shown) to the inward-facing side of the shell component 150, the apparatus 130 comprises three robots 138 arranged within the interior of the shell component 150. The robots 138 each run on a respective rail 140 attached to either main deck transverse beams 160 forming part of the floor grid, or freight deck transverse beams 161 forming part of the cargo floor of the aircraft fuselage.

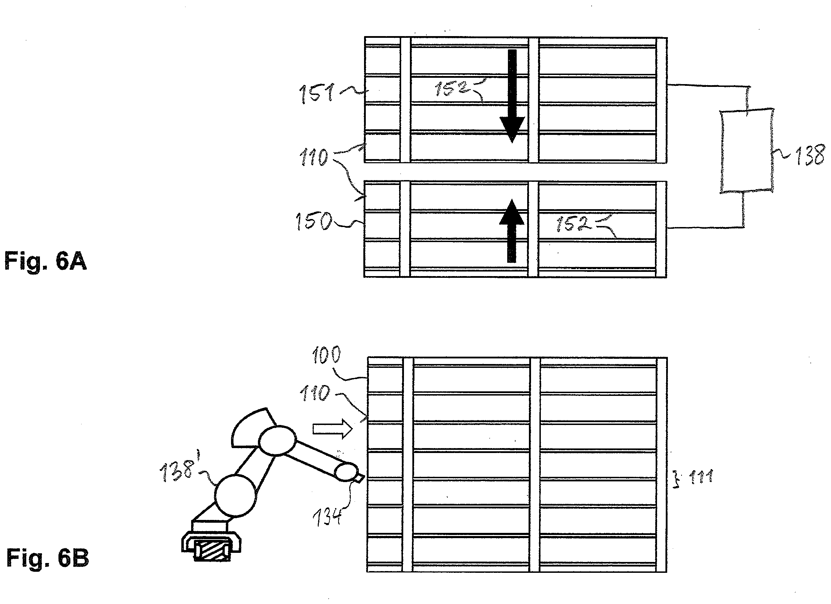

Figures 6A-B are schematic planar views of a positioning step and an electromagnetic pulse generating step, respectively, of a method according to a further embodiment wherein a shell component 150 is joined to a further shell component 151 along a longitudinal junction. Both shell components 150, 151 are assumed to be electrically conductive. In the positioning step shown in Figure 6A, the shell component 150 and further shell component 151 are moved by a robot 138 towards each other as indicated by arrow symbols. In the electromagnetic pulse generating step shown in Figure 6B, a skin overlap zone 111 has been formed in which the outer skin 110 of the shell component 150 and further shell component 151 overlap for a few centimetres. A further robot 138' is moved as indicated by an arrow symbol along the length of the structural component 100 to be formed, to subject the skin overlap zone 111 to an electromagnetic pulse in order to join the shell components 150, 151 to each another.

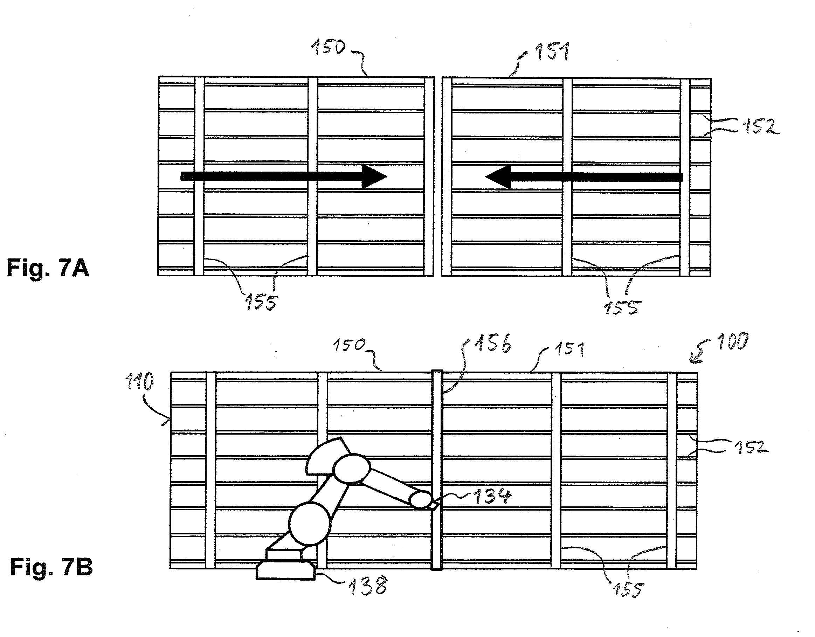

Figures 7A-B are schematic planar views of a positioning step and an electromagnetic pulse generating step, respectively, of a method according to a further embodiment wherein a shell component 150 is joined to a further shell component 151 along a circumferential junction. In the positioning step shown in Figure 7A, the shell component 150 and further shell component 151 are moved towards each other as indicated by arrow symbols, e.g. by using an appropriate transport device. In the electromagnetic pulse generating step shown in Figure 7B, butt strap 156 has been positioned that overlaps the outer skin 110 of both the shell component 150 and the further shell component 151 for a few centimetres. A robot 138 is moved along the length of the butt strap 156, to subject the butt strap 156 and the outer skin 110 overlapped by the butt strap 156 to an electromagnetic pulse in order to join the butt strap 156 to the outer skin 110 of both shell components 150, 151, thereby indirectly joining the shell component 150 to the further shell component 151. In Figure 7B, the robot 138 is shown to apply the electromagnetic pulse from the inward-facing side of the shell components 150, 151. However, in alternative embodiments the electromagnetic pulse may be applied from the outward-facing side of the shell components 150, 151 or from both sides in combination. Preferably, the electromagnetic pulse is applied from the outward-facing side of the shell components 150, 151 for simpler operation.

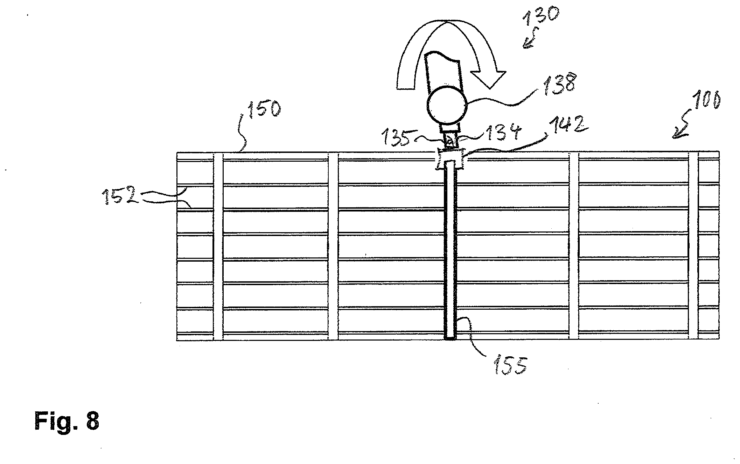

Figure 8 is a schematic planar view of an electromagnetic pulse generating step of a manufacturing method wherein the shell component 150 is joined to an integral frame 155, which is configured to be attached directly to the outer skin 110 without intervening clips. The manufacturing apparatus 130 comprises a robot 138 equipped with an electromagnetic pulse generator 134 and U-shaped profile 142 for holding the integral frame 155 to the outer skin 110 of the shell component 150 while the electromagnetic pulse generator 134 generates an electromagnetic pulse for joining the integral frame 155 to the outer skin 110 in the vicinity of the U-shaped profile 142. Then, the robot 138 moves along the integral frame 155 while applying further electromagnetic pulses to the integral frame 155 and overlapping outer skin 110 portions in order to join the integral frame 155 to the outer skin 110 along the entire length of the integral frame 155.

In Figure 8, the robot 138 is shown to apply the electromagnetic pulse from the inward-facing side of the shell component 150. However, in alternative embodiments the electromagnetic pulse may be applied from the outward-facing side of the shell component 150 or from both sides in combination. Preferably, the electromagnetic pulse is applied from the outward-facing side of the shell component 150 for simpler operation.

### Reference Signs

- 100: structural component
- 101: opening
- 105: stand
- 106: suction cup
- 108: temporary fastener
- 110: outer skin
- 111: skin overlap
- 122: stringer coupling
- 123: frame coupling
- 130: apparatus
- 134: electromagnetic pulse generator
- 135: electromagnetic coil
- 136: conductive tooling
- 138: robot
- 140: rail
- 141: roof suspension
- 142: U-shaped profile
- 150, 151: shell component
- 152: stringer
- 153: clip
- 154: frame
- 155: integral frame
- 156: butt strap
- 160: main deck transverse beam
- 161: freight deck transverse beam

## Claims

1. A method of manufacturing a structural component (100) for an aircraft or spacecraft from a shell component (150) of the aircraft or spacecraft and a further component (151-156), at least one of the shell component (150) and the further component (151-156) being electrically non-conductive, the method comprising:
Positioning the shell component (150)and the further component (151-156) adjacent to each other; and
Generating an electromagnetic pulse and thereby accelerating an electrically conductive tooling (136) to join the shell component (150) and the further component (151-156) .

2. The method according to claim 1, further comprising holding at least one of the shell component (150) and the further component (151-156) by at least one suction cup (106) or temporary fastener (108), before generating the electromagnetic pulse.

3. The method according to claim 1 or 2, further comprising bonding the shell component (150) to the further component (151-156), before generating the electromagnetic pulse.

4. The method according to any one of claims 1 to 3, wherein both of the shell component (150) and the further component (151-156) are electrically non-conductive.

5. The method according to any one of claims 1 to 4, wherein the shell component (150) comprises an outer skin (110) of the aircraft or spacecraft, and wherein the further component (151-156) is joined to the shell component (150) by being joined to the outer skin (110).

6. The method according to claim 5, wherein the further component is selected from the group consisting of a further shell component (151), a stringer (152), a clip (153), a frame (154), an integral frame (155), and a butt strap (156) .

7. The method according to any one of claims 1 to 4, wherein the further component comprises a frame (154) and the shell component (150) comprises a clip (153) attached to an outer skin (110) of the aircraft or spacecraft, the shell component (150) and the further component being joined by joining the clip (153) to the frame (154).

8. The method according to any one of claims 1 to 4, wherein the shell component (150) comprises a stringer (152) or frame (154) attached to an outer skin (110) of the aircraft or spacecraft, and wherein the further component comprises a coupling (122, 123), the shell component (150) and the further component being joined by joining the coupling (122, 123) to the stringer (152) or frame (154).

9. An apparatus (130) for manufacturing a structural component (100) for an aircraft or spacecraft from a shell component (150) of the aircraft or spacecraft and a further component (151-156), at least one of the shell component (150) and the further component (151-156) being electrically non-conductive, the apparatus (130) comprising:
a positioner (105, 138, 142) for positioning the shell component (150) and the further component (151-156) adjacent to each other;
**characterised by**
an electromagnetic pulse generator (134) for generating an electromagnetic pulse to join the shell component (150) and the further component (151-156); and
a conductive tooling (136) configured to be accelerated by the electromagnetic pulse to join the shell component (150) and the further component (151-156).

10. The apparatus (130) according to claim 9, wherein the positioner (105, 138, 142) comprises at least one suction cup (106) for holding the shell component (150), before generating the electromagnetic pulse.

11. The apparatus (130) according to claim 9 or 10, wherein the positioner (105, 138, 142) comprises a robot (138) for holding the further component (151-156) adjacent to the shell component (150), before generating the electromagnetic pulse.

12. The apparatus (130) according to claim 11, wherein the positioner (105, 138, 142) comprises a rail (140) for guiding the robot (138) along the shell component (150).

13. The apparatus (130) according to claim 12, wherein the positioner (105, 138, 142) is configured to support the shell component (150) from below, the rail (140) being arranged above the shell component (150) to suspend the robot (138) into the shell component (150) through an opening (101) therein.

14. The apparatus (130) according to any one of claims 9 to 13, wherein the positioner (105, 138, 142) comprises a U-shaped profile (142) for holding the further component (151), adjacent to the shell component (150), and the electromagnetic pulse generator (134) comprises an electromagnetic coil (135) for ejecting the further component (151) from the U-shaped profile (142) toward the shell component (150), by the electromagnetic pulse.

## Patentansprüche

1. Verfahren zur Herstellung einer Strukturkomponente (100) für ein Flugzeug oder ein Raumfahrzeug aus einer Mantelkomponente (150) des Flugzeugs oder Raumfahrzeugs und einer weiteren Komponente (151-156), wobei mindestens eine der Mantelkomponente (150) und der weiteren Komponente (151-156) elektrisch nicht-leitend ist, wobei das Verfahren Folgendes umfasst:
Positionieren der Mantelkomponente (150) und der weiteren Komponente (151-156) nebeneinander; und
Generieren eines elektromagnetischen Impulses und dadurch Beschleunigen eines elektrisch leitfähigen Werkzeugs (136), um die Mantelkomponente (150) und die weitere Komponente (151-156) zu verbinden.

2. Verfahren nach Anspruch 1, des Weiteren umfassend, mindestens eine der Mantelkomponente (150) und der weiteren Komponente (151-156) durch mindestens einen Saugnapf (106) oder ein temporäres Befestigungsmittel (108) zu halten, bevor der elektromagnetische Impuls generiert wird.

3. Verfahren nach Anspruch 1 oder 2, des Weiteren umfassend, die Mantelkomponente (150) an die weitere Komponente (151-156) zu bonden, bevor der elektromagnetische Impuls generiert wird.

4. Verfahren nach einem der Ansprüche 1 bis 3, wobei sowohl die Mantelkomponente (150) als auch die weitere Komponente (151-156) elektrisch nicht-leitend sind.

5. Verfahren nach einem der Ansprüche 1 bis 4, wobei die Mantelkomponente (150) eine Außenhaut (110) des Flugzeugs oder Raumfahrzeugs umfasst und wobei die weitere Komponente (151-156) mit der Mantelkomponente (150) verbunden wird, indem sie mit der Außenhaut (110) verbunden wird.

6. Verfahren nach Anspruch 5, wobei die weitere Komponente aus folgender Gruppe ausgewählt ist: eine weitere Mantelkomponente (151), eine Längsversteifung (152), eine Klammer (153), ein Rahmen (154), ein integraler Rahmen (155), und ein Stoßblech (156).

7. Verfahren nach einem der Ansprüche 1 bis 4, wobei die weitere Komponente einen Rahmen (154) umfasst und die Mantelkomponente (150) eine Klammer (153) umfasst, die an einer Außenhaut (110) des Flugzeugs oder Raumfahrzeugs befestigt ist, wobei die Mantelkomponente (150) und die weitere Komponente durch Verbinden der Klammer (153) mit dem Rahmen (154) verbunden wird.

8. Verfahren nach einem der Ansprüche 1 bis 4, wobei die Mantelkomponente (150) eine Längsversteifung (152) oder einen Rahmen (154) umfasst, die bzw. der an einer Außenhaut (110) des Flugzeugs oder Raumfahrzeugs befestigt ist, und wobei die weitere Komponente eine Kopplung (122, 123) umfasst, wobei die Mantelkomponente (150) und die weitere Komponente durch Verbinden der Kopplung (122, 123) mit der Längsversteifung (152) oder dem Rahmen (154) verbunden wird.

9. Vorrichtung (130) zum Herstellen einer Strukturkomponente (100) für ein Flugzeug oder Raumfahrzeug aus einer Mantelkomponente (150) des Flugzeugs oder Raumfahrzeugs und einer weiteren Komponente (151-156), wobei mindestens eine der Mantelkomponente (150) und der weiteren Komponente (151-156) elektrisch nicht-leitend ist, wobei die Vorrichtung (130) Folgendes umfasst:
einen Positionierer (105, 138, 142) zum Positionieren der Mantelkomponente (150) und der weiteren Komponente (151-156) nebeneinander;
**gekennzeichnet durch**
einen elektromagnetischen Impulsgenerator (134) zum Generieren eines elektromagnetischen Impulses zum Verbinden der Mantelkomponente (150) und der weiteren Komponente (151-156); und
ein leitfähiges Werkzeug (136), das dafür ausgestaltet ist, durch den elektromagnetischen Impuls beschleunigt zu werden, um die Mantelkomponente (150) und die weitere Komponente (151-156) zu verbinden.

10. Vorrichtung (130) nach Anspruch 9, wobei der Positionierer (105, 138, 142) mindestens einen Saugnapf (106) umfasst, um die Mantelkomponente (150) zu halten, bevor der elektromagnetische Impuls generiert wird.

11. Vorrichtung (130) nach Anspruch 9 oder 10, wobei der Positionierer (105, 138, 142) einen Roboter (138) umfasst, um die weitere Komponente (151-156) neben der Mantelkomponente (150) zu halten, bevor der elektromagnetische Impuls generiert wird.

12. Vorrichtung (130) nach Anspruch 11, wobei der Positionierer (105, 138, 142) eine Schiene (140) umfasst, um den Roboter (138) entlang der Mantelkomponente (150) zu führen.

13. Vorrichtung (130) nach Anspruch 12, wobei der Positionierer (105, 138, 142) dafür ausgestaltet ist, die Mantelkomponente (150) von unten zu stützen, wobei die Schiene (140) oberhalb der Mantelkomponente (150) angeordnet ist, um den Roboter (138) in die Mantelkomponente (150) durch einen Öffnung (101) darin abzuhängen.

14. Vorrichtung (130) nach einem der Ansprüche 9 bis 13, wobei der Positionierer (105, 138, 142) ein U-förmiges Profil (142) umfasst, um die weitere Komponente (151) neben der Mantelkomponente (150) zu halten, und der elektromagnetische Impulsgenerator (134) eine elektromagnetische Spule (135) umfasst, um die weitere Komponente (151) von dem U-förmigen Profil (142) durch den elektromagnetischen Impuls in Richtung der Mantelkomponente (150) auszugeben.

## Revendications

1. Procédé de fabrication d'un composant structural (100) destiné à un aéronef ou à un véhicule spatial, à partir d'un composant de coque (150) de l'aéronef ou du véhicule spatial et d'un autre composant (151 à 156), le composant de coque (150) et/ou l'autre composant (151 à 156) étant non conducteur(s) de l'électricité, le procédé comprenant les étapes suivantes :
positionner le composant de coque (150) et l'autre composant (151 à 156) à proximité l'un de l'autre ; et
produire une impulsion électromagnétique de manière à accélérer un outillage conducteur de l'électricité (136) pour assembler le composant de coque (150) et l'autre composant (151 à 156).

2. Procédé selon la revendication 1, comprenant en outre le maintien du composant de coque (150) et/ou de l'autre composant (151 à 156) au moins au moyen d'une ventouse (106) ou d'une fixation temporaire (108), avant de produire l'impulsion électromagnétique.

3. Procédé selon la revendication 1 ou 2, comprenant en outre la liaison du composant de coque (150) à l'autre composant (151 à 156), avant de produire l'impulsion électromagnétique.

4. Procédé selon l'une quelconque des revendications 1 à 3, dans lequel le composant de coque (150) et l'autre composant (151 à 156) sont tous deux non conducteurs de l'électricité.

5. Procédé selon l'une quelconque des revendications 1 à 4, dans lequel le composant de coque (150) comprend un revêtement extérieur (110) de l'aéronef ou du véhicule spatial, et dans lequel l'autre composant (151 à 156) est relié au composant de coque (150) en étant relié au revêtement extérieur (110).

6. Procédé selon la revendication 5, dans lequel l'autre composant est choisi dans le groupe composé d'un autre composant de coque (151), d'une lisse (152), d'une agrafe (153), d'un cadre (154), d'un cadre intégré (155) et d'un couvre-joint (156).

7. Procédé selon l'une quelconque des revendications 1 à 4, dans lequel l'autre composant comprend un cadre (154) et le composant de coque (150) comprend une agrafe (153) fixée à un revêtement extérieur (110) de l'aéronef ou du véhicule spatial, le composant de coque (150) et l'autre composant étant assemblés par assemblage de l'agrafe (153) et du cadre (154).

8. Procédé selon l'une quelconque des revendications 1 à 4, dans lequel le composant de coque (150) comprend une lisse (152) ou un cadre (154) fixé(e) à un revêtement extérieur (110) de l'aéronef ou du véhicule spatial, et dans lequel l'autre composant comprend un raccord (122, 123), le composant de coque (150) et l'autre composant étant assemblés par assemblage du raccord (122, 123) et de la lisse (152) ou du cadre (154).

9. Appareil (130) permettant de fabriquer un composant structural (100) destiné à un aéronef ou à un véhicule spatial, à partir d'un composant de coque (150) de l'aéronef ou du véhicule spatial et d'un autre composant (151 à 156), le composant de coque (150) et/ou l'autre composant (151 à 156) étant non conducteur(s) de l'électricité, l'appareil (130) comprenant :
un positionneur (105, 138, 142) destiné à positionner le composant de coque (150) et l'autre composant (151 à 156) à proximité l'un de l'autre ;
**caractérisé par** :
un générateur d'impulsions électromagnétiques (134) destiné à produire une impulsion électromagnétique pour assembler le composant de coque (150) et l'autre composant (151 à 156) ; et
un outillage conducteur (136) destiné à être accéléré par l'impulsion électromagnétique pour assembler le composant de coque (150) et l'autre composant (151 à 156).

10. Appareil (130) selon la revendication 9, dans lequel le positionneur (105, 138, 142) comprend au moins une ventouse (106) destinée à maintenir le composant de coque (150) avant de produire l'impulsion électromagnétique.

11. Appareil (130) selon la revendication 9 ou 10, dans lequel le positionneur (105, 138, 142) comprend un robot (138) destiné à maintenir l'autre composant (151 à 156) à proximité du composant de coque (150), avant de produire l'impulsion électromagnétique.

12. Appareil (130) selon la revendication 11, dans lequel le positionneur (105, 138, 142) comprend un rail (140) destiné à guider le robot (138) le long du composant de coque (150).

13. Appareil (130) selon la revendication 12, dans lequel le positionneur (105, 138, 142) est conçu pour supporter le composant de coque (150) par le dessous, le rail (140) étant disposé au-dessus du composant de coque (150) pour suspendre le robot (138) dans le composant de coque (150) au travers d'une ouverture (101) qui y est ménagée.

14. Appareil (130) selon l'une quelconque des revendications 9 à 13, dans lequel le positionneur (105, 138, 142) comprend un profilé en U (142) destiné à maintenir l'autre composant (151) à proximité du composant de coque (150), et le générateur d'impulsions électromagnétiques (134) comprend une bobine électromagnétique (135) destinée à éjecter l'autre composant (151), du profilé en U (142) vers le composant de coque (150), au moyen de l'impulsion électromagnétique.
